# EUROPÄISCHE PATENTSCHRIFT

(11) **EP 1 271 316 B1**
(45) Veröffentlichungstag und Bekanntmachung des Hinweises auf die Patenterteilung: **24.03.2004**
(21) Anmeldenummer: 01115831.8
(22) Anmeldetag: 28.06.2001
(51) Int. Cl.: G06F 11/14

(54) **Verfahren zur Verkürzung der Sperrzeit während der Datensicherung einer gemeinsamen Datenbank**
Method for shortening the locking time during the copy of a shared database
Méthode de réduction du temps de synchronisation pendant la copie d'une base de données partagée

(43) Veröffentlichungstag der Anmeldung: 02.01.2003
(73) Patentinhaber: SIEMENS AKTIENGESELLSCHAFT, 80333 München (DE)
(72) Erfinder: Frank, Claus-Andreas, 81475 München (DE); Mohr, Guenther, 82140 Olching (DE); Sommer, Gerhard, 82065 Baierbrunn (DE); Tan, Hok-Tjhoen, 1210 Wien (AT)

(56) Entgegenhaltungen:
- EP-A- 0 921 466
- US-A- 5 163 148
- US-A- 5 241 670

## Beschreibung

Während der Sicherung von in einzelnen Dateien abgelegten Daten einer Datenbank ist aus Konsistenzgründen eine Veränderung der Daten in den einzelnen Dateien nicht zulässig. Aus diesem Grund werden die Dateien ab einem bestimmten Zeitpunkt während eines Sicherungslaufes für verändernde Zugriffe gesperrt. Nach erfolgtem Kopieren der Dateien wird die Sperre wieder aufgehoben..

Mit zunehmender Größe der Datenbank steigt der Zeitbedarf für einen solchen Sicherungslauf, was dazu führt, daß während eines Sicherungslaufes das auf die einzelnen Dateien der Datenbank zugreifende System in seiner Leistung und Funktionsfähigkeit beeinträchtigt wird.

Um dieses Problem zu vermeiden, könnte ein Verfahren eingesetzt werden, das die Veränderungen zwar zuläßt, diese jedoch während des Sicherungslaufes nicht in die Dateien der zu sichernden Datenbank einarbeitet, sondern eine separate Aufzeichnungsdatei anlegt, die nach Beendigung des Sicherungslaufes in die Dateien der Datenbank eingearbeitet werden würde.

Ein solches Verfahren ist aus Dokument EP-A-0 921 466 bekannt.

Während des Verarbeitens dieser ersten Aufzeichnungsdatei wäre wiederum von Veränderungen an den Dateien der Datenbank auszugehen. Diese Veränderungen dürften aus Konsistenzgründen erst nach Einarbeitung aller Veränderungen aus der ersten Aufzeichnungsdatei vorgenommen werden und müßten daher in einer zweiten Aufzeichnungsdatei erfaßt werden. Das Verfahren würde dann instabil, wenn die zweite Aufzeichnungsdatei schneller wächst als die erste Aufzeichnungsdatei abgearbeitet werden kann.

Ein Problem im Zusammenhang mit der Datensicherung besteht darin, die Dauer der während des Kopierens der Dateien für die gesamte Datenbank notwendige Sperre so zu verkürzen, daß Instabilitäten nicht auftreten, ohne dabei den Umfang des Sicherungslaufes einzuschränken.

Die der vorliegenden Erfindung zugrundeliegende Aufgabe besteht darin, ein Verfahren zur Datensicherung anzugeben, welches eine möglichst kurze Veränderungssperre der zu sichernden Daten erfordert.

Diese Aufgabe wird durch die Merkmale des Patentanspruchs 1 gelöst.

Ein wesentlicher Vorteil des erfindungsgemäßen Verfahrens besteht darin, daß Leistung und Funktionsfähigkeit des auf die Datenbank zugreifenden Systems während des ersten Schrittes nicht beeinträchtigt werden. Der zusätzliche Aufwand für das Erstellen der Aufzeichnungsdatei ist vernachlässigbar. Nur während des zweiten Verfahrensschrittes ist eine Sperre der zu sichernden Daten erforderlich. Es ist davon auszugehen, daß die Anzahl der im zweiten Schritt zu übertragenden Dateien sehr viel kleiner ist als die Anzahl der im ersten Schritt zu übertragenden Dateien. Daher wird durch das erfindungsgemäße Verfahren eine wesentlich verkürzte Veränderungssperre erreicht.

Gemäß einer vorteilhaften Ausgestaltung kann ein Parameter, beispielsweise die Anzahl der während des ersten Schrittes veränderten Dateien oder Summe der Größen aller während des ersten Schrittes veränderten Dateien, herangezogen werden, um zu verhindern, daß aufgrund eines zu großen zu übertragenden Datenvolumens während des zweiten Schrittes die Veränderungssperre zu lange aufrechterhalten werden muß.

Nach einer weiteren vorteilhaften Ausgestaltung des erfindungsgemäßen Verfahrens kann eine maximale Zeitdauer für den zweiten Schritt vorgesehen werden. Bei Überschreitung dieser Zeitdauer, z.B. aufgrund hoher Systemlast oder höherpriorer Prozesse, wird die Datensicherung abgebrochen, um zu verhindern, daß die Veränderungssperre zu lange aufrechterhalten werden muß.

Eine vorteilhafte Ausgestaltung der Erfindung ist dem Unteransprüch 4 zu entnehmen.

Im folgenden wird das erfindungsgemäße Verfahren anhand einer Zeichnung näher erläutert.

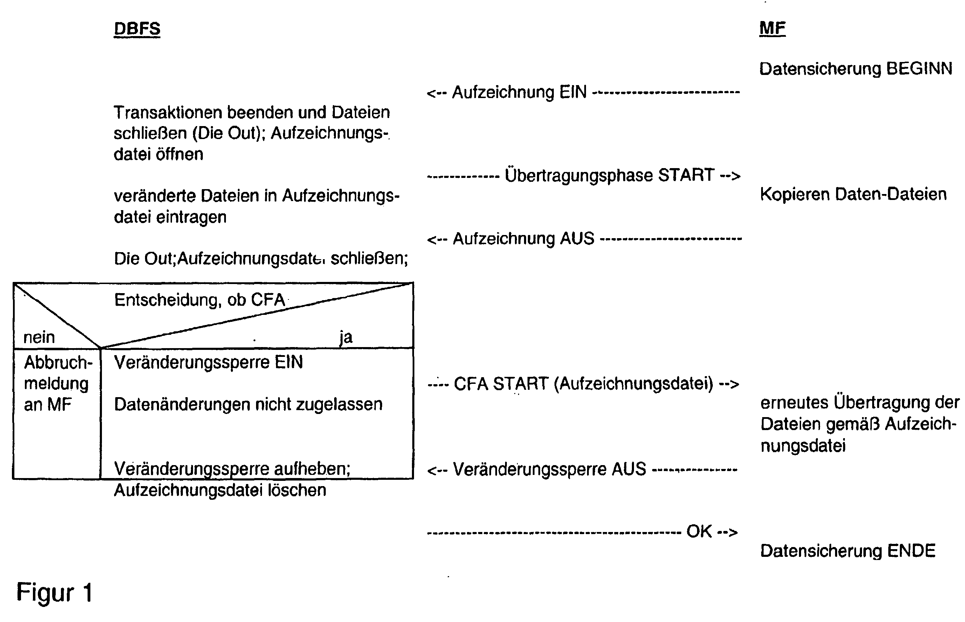

Die Figur zeigt den Ablauf der CFA (Copy File Again, erneutes Kopieren der Dateien) Methode zur Sicherung von Dateien einer Datenbank DB, deren einzelne Dateien auf einem Data Base File Server DBFS abgelegt sind. Die Datensicherung wird durch eine Management-Funktion MF angestoßen.

Die Datensicherung läuft in folgenden Schritten ab:
(1) Durch Zeitsteuerung oder Benutzereingabe wird in MF die Durchführung einer Datensicherung veranlaßt.
(2) MF signalisiert an DBFS, daß DBFS in den Aufzeichnungsmodus treten soll.
(3) DBFS beendet alle anstehenden Transaktionen und schließt alle offenen Dateien. Dieser Vorgang wird Die-Out-Phase genannt.
(4) DBFS öffnet die Aufzeichnungsdatei, in der alle von nun an veränderten Dateien vermerkt werden.
(5) DBFS signalisiert an MF, daß mit der Übertragung der zu sichernden Daten begonnen werden kann.
(6) MF signalisiert nach Abschluß der Übertragung aller zu sichernden Daten an DBFS, daß der Aufzeichnungsmodus zu beenden ist.
(7) DBFS durchläuft eine zweite Die-Out-Phase und schließt die Aufzeichnungsdatei.
(8) DBFS prüft, ob die Durchführung von CFA, d.h. das erneute Kopieren der - veränderten - Dateien, möglich ist. Als Kriterien stehen die Anzahl oder das Gesamtdatenvolumen der in der Aufzeichnungsdatei vermerkten Dateien zur Verfügung. Falls die Auswertung der Aufzeichnungsdatei einen Wert kleiner als das gewählte Kriterium liefert, wird der Vorgang mit CFA fortgesetzt, andernfalls an dieser Stelle abgebrochen, die bis dahin erfolgte Sicherung wird verworfen und die Aufzeichnungsdatei gelöscht.
(9) DBFS aktiviert die Datenveränderungssperre.
(10) DBFS signalisiert an MF mit dem CFA, d.h. dem erneuten Kopieren der Dateien anhand der Aufzeichnungsdatei, zu beginnen. Dazu liefert DBFS die Aufzeichnungsdatei an MF, so daß MF alle in dieser Liste enthaltenen Dateien erneut übertragen kann.
(11) MF überträgt die Dateien. Folgender Mechanismus kann optional eingesetzt werden: Falls durch DBFS festgestellt wird, daß die Dateiübertragung und damit die Veränderungssperre z.B. aufgrund hoher Systemlast zu länger als eine vorgegebene Zeit dauert, wird der Vorgang an dieser Stelle abgebrochen, die bis dahin erfolgte Sicherung wird verworfen und die Aufzeichnungsdatei gelöscht.
(12) MF signalisiert nach Abschluß der Übertragung aller erneut zu übertragenden Dateien an DBFS, daß die Veränderungssperre aufzuheben ist.
(13) DBFS geht in den normalen Arbeitsmodus über und löscht die Aufzeichnungsdatei für die nächste Datensicherung.

## Patentansprüche

1. Verfahren zur Datensicherung, das bei auf mehrere Dateien auf einem Arbeitsmedium eines Datenverarbeitungssystems aufgeteilten Daten angewendet wird,
- demgemäß in einem ersten Schritt die zu sichernden Daten vom Arbeitsmedium auf ein Sicherungsmedium übertragen werden, wobei während des ersten Schrittes Änderungen der zu sichernden Daten auf dem Arbeitsmedium weiterhin zulässig sind, jedoch in einer Aufzeichnungsdatei gesondert vermerkt werden,
- demgemäß in einem zweiten Schritt die auf das Sicherungsmedium übertragenen Daten um die während der Bearbeitungszeit des ersten Schrittes erfolgten Änderungen der zu sichernden Daten anhand der Aufzeichnungsdatei ergänzt werden, wobei während des zweiten Schrittes die zu sichernden Daten einer Veränderungssperre unterliegen.

2. Verfahren nach Anspruch 1,
**dadurch gekennzeichnet,**
**daß** bei Überschreiten eines vorzugebenden Wertes für einen die Menge der während des ersten Schrittes erfolgten Änderungen widerspiegelnden Parameter die Datensicherung abgebrochen und der zweite Schritt nicht ausgeführt wird, die bisher übertragenen Daten sowie die Informationen der Aufzeichnungsdatei verworfen werden und die Datensicherung nach einer geeigneten Zeit beginnend mit dem ersten Schritt neu gestartet wird.

3. Verfahren nach einem der Ansprüche 1 oder 2,
**dadurch gekennzeichnet,**
**daß** bei Überschreiten einer vorzugebenden maximalen Zeitdauer des zweiten Schrittes dieser zweite Schritt abgebrochen und die Veränderungssperre unverzüglich aufgehoben wird, die bisher übertragenen Daten sowie die Informationen der Aufzeichnungsdatei verworfen werden und die Datensicherung nach einer geeigneten Zeit beginnend mit dem ersten Schritt neu gestartet wird.

4. Verfahren nach einem der Ansprüche 1 bis 3,
**dadurch gekennzeichnet,**
**daß** die zu sichernden Daten Datenbanken eines Vermittlungssystems sind.

## Claims

1. Data backup method which is used for data split over a plurality of files on a working medium in a data processing system,
- according to which, in a first step, the data to be backed up are transferred from the working medium to a backup medium, with changes to the data to be backed up continuing to be permissible on the working medium during the first step, but being noted separately in a recording file,
- according to which, in a second step, the data transferred to the backup medium are complemented by the changes, made during the first step's processing time, to the data to be backed up using the recording file, with the data to be backed up being subject to an alteration block during the second step.

2. Method according to Claim 1,
**characterized**
**in that**, if a prescribable value is exceeded for a parameter reflecting the quantity of changes made during the first step, the data backup is terminated and the second step is not performed, the data transferred to date and the information in the recording file are discarded, and the data backup is restarted after a suitable time, starting with the first step.

3. Method according to one of Claims 1 or 2,
**characterized**
**in that**, if a prescribable maximum length of time for the second step is exceeded, this second step is terminated and the alteration block is immediately lifted, the data transferred to date and the information in the recording file are discarded, and the data backup is restarted after a suitable time, starting with the first step.

4. Method according to one of Claims 1 or 3,
**characterized**
**in that** the data to be backed up are databases in a switching system.

## Revendications

1. Méthode de sauvegarde de données appliquée dans le cas de données réparties sur plusieurs fichiers d'un média de travail d'un système de traitement de données, dans laquelle
- les données à sauvegarder sont transférées, dans une première étape, du média de travail vers un média de sauvegarde, des modifications des données à sauvegarder demeurant autorisées sur le média de travail pendant ladite première étape, mais étant notées séparément dans un fichier d'enregistrement et
- les données transférées sur le média de sauvegarde sont complétées, dans une deuxième étape et à l'aide du fichier d'enregistrement, par les modifications des données à sauvegarder faites pendant le temps opérationnel de la première étape, les données à sauvegarder étant soumises à un blocage anti-modifications pendant ladite deuxième étape.

2. Méthode selon la revendication 1, **caractérisée en ce qu'**en cas de dépassement d'une valeur à prédéterminer pour un paramètre reflétant la quantité des modifications effectuées pendant la première étape, la sauvegarde des données est interrompue et la deuxième étape n'est pas exécutée, les données transférées jusqu'à cet instant ainsi que les informations du fichier d'enregistrement sont rejetées et la sauvegarde des données est relancée au bout d'un temps approprié en commençant par la première étape.

3. Méthode selon l'une des revendications 1 ou 2, **caractérisée en ce qu'**en cas de dépassement d'une durée de temps maximale à prédéterminer pour la deuxième étape, ladite deuxième étape est interrompue et le blocage anti-modifications est annulé sans délai, les données transférées jusqu'à cet instant ainsi que les informations du fichier d'enregistrement sont rejetées et la sauvegarde des données est relancée au bout d'un temps approprié en commençant par la première étape.

4. Méthode selon l'une des revendications 1 à 3, **caractérisée en ce que** les données à sauvegarder sont des bases de données d'un système de commutation.
